# EUROPEAN PATENT SPECIFICATION

(11) **EP 2 528 216 B1**
(45) Date of publication and mention of the grant of the patent: **01.03.2017**
(21) Application number: 12168609.1
(22) Date of filing: 21.05.2012
(51) Int. Cl.: H02M 3/156, H05B 33/08

(54) **Self-oscillating buck converter**
Selbstschwingender Abwärtswandler
Convertisseur abbaisseur de tension auto-oscillant

(30) Priority: 24.05.2011 IT TO20110452
(43) Date of publication of application: 28.11.2012
(73) Proprietor: OSRAM GmbH, 80807 München (DE); OSRAM S.P.A. - SOCIETA' RIUNITE OSRAM EDISON CLERICI, 20126 Milano (IT)
(72) Inventor: Angelin, Francesco, I-31021 Mogliano Veneto (Treviso) (IT)
(74) Representative: Bosotti, Luciano

(56) References cited:
- WO-A1-2008/132658
- US-A1- 2010 045 204
- OSSMANN M: "SMALL DC-DC CONVERTERS DC-DC CONVERTERS UNDER THE MAGNIFYING GLASS", ELEKTOR, CANTERBURY, GB, vol. 29, no. 317, 1 January 2003 (2003-01-01), pages 54-58, XP001171993, ISSN: 0268-4519

## Description

### Technical Field

The present disclosure relates to converter circuits.

Various embodiments may refer to switching converter circuits, implemented in the so-called buck topology (buck converters).

A possible application of embodiments involves their use as an auxiliary supply with constant voltage output, e.g. in order to supply light sources.

### Technological Background

A buck switching converter circuit may be provided with an oscillator, comprising its own components and operating at its own frequency, if necessary with a modulation from additional circuitry. Nowadays various manufactures provide monolithic solutions, adapted to be used in order to implement step-down converters.

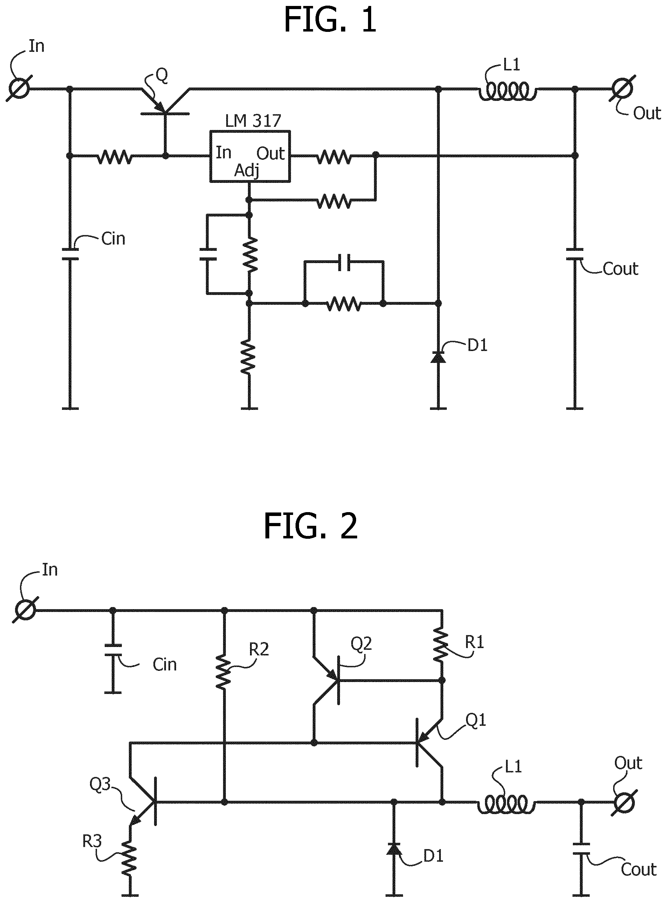

Figure 1 shows the diagram of a self-oscillating buck converter implemented by using a standard linear regulator. Such an arrangement is found in the product range of the company National Semiconductors.

The diagram in Figure 2 refers on the contrary to a converter adapted to be used for supplying LED light sources, as described in document US-A-2010/0045204.

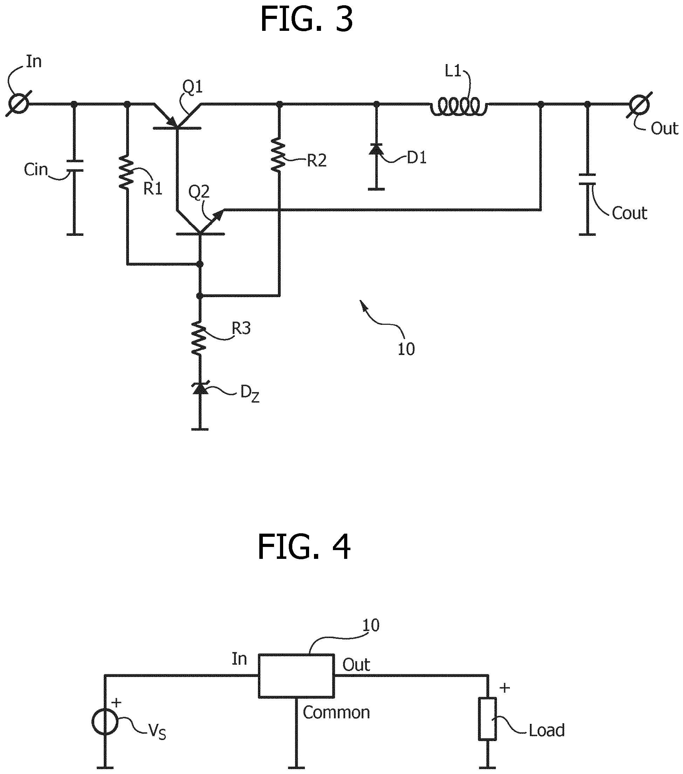

As will be seen in the following with reference to Figure 4, such converters are adapted to be interposed between an input In, to which a supply voltage V_{S} is applied, and an output terminal Out, which is adapted to be connected to a load denoted with Load.

A common feature to the solutions shown in Figures 1 and 2 is the provision of an output stage having a "portal" structure, with an intermediate or transverse branch including an inductor L1 interposed between two lateral branches, respectively comprising:
- a diode D1 (named freewheeling diode), connected with its anode to ground and with its cathode to inductor L1 (specifically at the terminal of inductor L1 which faces input In), and
- an output capacitor Cout, interposed between ground and the other terminal of inductor L1, connected to output Out of the circuit.

In the exemplary embodiment of Figure 1, the core of the oscillator is comprised of an IC LM317. In the solution depicted in Figure 2, the previously described output circuit D1, L1, C1 is supplied via an oscillator, which comprises two transistors (bipolar transistors in the presently considered example) Q1, Q2, with associated biasing resistors R1 and R2, with a further transistor Q3 (again, a bipolar transistor in the considered example) with a respective biasing resistor R3. There can also be provided an input capacitor Cin with filtering function.

The solutions described in Figures 1 and 2 represent a rich and various state of the art, comprising documents such as, for example, WO-A-2009/089912, WO-A-2009/089919, EP-A-1 988 517, DE 103 49 196, DE 10 2007 015982 and besides, among documents still unpublished on the filing date of the present application, DE 10 2010 001 807, DE 10 2010 031 657, DE 10 2010 031 669 and DE 10 2010 028 804.

More specifically, the invention relates to a converter according to the preamble of claim 1, which is known e.g. from OSSMANN M: "SMALL DC-DC CONVERTERS DC-DC CONVERTERS UNDER THE MAGNIFYING GLASS", ELEKTOR, CANTERBURY, GB, vol.29, no.317, 1 January 2003, pages 54-58, XP001171993. Both WO 2008/132658 A1 and US 2010/045204 A1 are similarly of interest for the invention.

### Object and Summary

In the state of the art the need is felt for self-oscillating buck converters, i.e. of the kind wherein an oscillator is not specifically implemented, but wherein the oscillating behaviour is obtained intrinsically thanks to the circuit topology.

The interest in self-oscillating arrangements is felt e.g. when the input voltage is too high in comparison with the acceptable values in commercially available low-voltage monolithic circuits, or else when it is too low for devices adapted to specific purposes, or in the case wherein the input voltage dynamics is high.

The object of the invention is therefore to make use of the buck technology as a self-oscillating converter in order to obtain an effective converter, with a small number of components, with low manufacturing costs and adapted for low power applications with constant voltage output, if necessary with medium-high input voltage, and which allows to improve conversion efficiency and to obtain higher switching frequencies.

According to the invention, such an object is achieved through a converter circuit having the features specifically set forth in the claim 1 that follows.

The claims are an integral part of the technical teaching of the invention provided herein.

In various embodiments, it is possible to obtain a converter circuit wherein an oscillator is not explicitly implemented, and wherein the oscillating behaviour is obtained intrinsically thanks to the circuit topology itself.

In various embodiments, the operating frequency can be normally variable as a function of the load and/or the input voltage, unlike what takes place in the foregoing,
- Figure 3 is a circuit diagram of an embodiment,
- Figure 4 shows the connection arrangement of an embodiment,
- Figures 5 to 9 show possible developments of the embodiment of Figure 3, and
- Figure 10 is a circuit diagram of an embodiment which is based on Figure 3, with the addition of the various developments shown in Figures 5 to 9.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

In Figures 3 to 10 parts, elements or components identical or equivalent to those described with reference to Figures 1 and 2 are denoted by the same references previously used in such Figures; the description of such previously described elements will not be repeated in the following in order not to overburden the present detailed description.

Again, for clarity of description, it is to be noted that in Figures 3 to 10 elements, parts or components which are mutually identical are denoted by the same references, so that the description of one of such parts, elements or components, provided with reference to one of such Figures, will not be repeated in the remaining Figures.

Briefly, in the diagram of Figure 3 a buck switching converter is shown having an input In for an input voltage V_{S} and an output Out for an output voltage to be fed to a load Load.

The converter according to the embodiment depicted in Figure 3 can be used in a connection arrangement as shown in Figure 4: herein the converter, denoted on the whole as 10, is connected - via input terminal In - to input voltage V_{S} and - via output terminal Out - to a load Load, having moreover a common reference to ground.

It will be appreciated that, although they are depicted for clarity of description, neither the supply source V_{S} nor the load Load are in general parts of converter 10.

In the exemplary embodiment of Figure 3, converter 10 comprises an output stage D1, L1, Cout of the kind previously described with reference to Figures 1 and 2, i.e. a stage with:
- a first lateral branch (facing towards output Out) comprising an output capacitor Cout to be loaded at the output voltage applied on terminal Out;
- an intermediate branch, comprising an inductor L1 to circulate current into output capacitor Cout, and
- a second lateral branch, comprising a freewheeling diode D1, to permit a current flow from ground towards inductor L1.

The exemplary embodiment shown in Figure 3 also involves the provision (albeit optional) of an input capacitor Cin, adapted to noise filtering, interposed between input terminal In and ground.

In the presently described exemplary embodiment there is moreover provided a (first) switch or electronic switch Q1 - which may be a transistor, e.g. a bipolar transistor - the main current flow line whereof (emitter-collector, in the case of a bipolar transistor) runs between input terminal In and inductor L1.

Components L1, Cout (LC output filter), D1 (freewheeling switch/diode) and Q1 (pass switch) make up, together with input capacitor Cin (if present), the basic structure of a buck converter. Such structure is known in itself, also as regards its basic operating principles, which makes it unnecessary to provide a detailed description thereof herein.

For the present purpose we wish to remind that inductor L1 and capacitor Cout produce the phase shift (or delay) which is crucial to trigger oscillation (reactive cell), while switch Q1 is adapted to cooperate, in a latch structure, with a second switch or electronic switch Q2 (which again may be a transistor, e.g. bipolar) whose main current flow line (i.e. the emitter-collector line, in the case of a bipolar transistor) is interposed between the control electrode (base, in the case of a bipolar transistor) of switch Q1 and output Out.

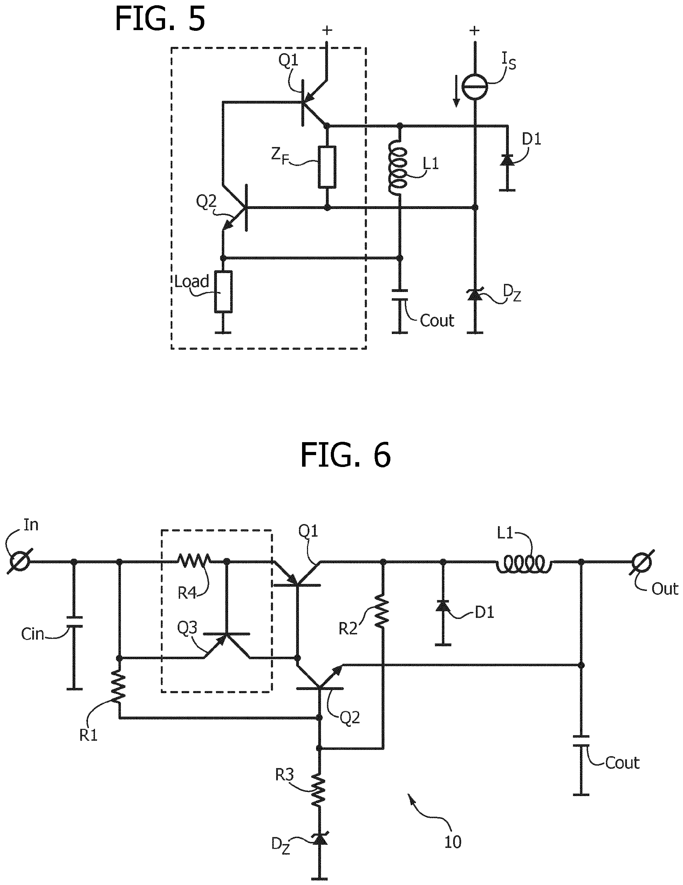

A biasing resistor R1, in the present case connected between the emitter of transistor Q1 and the base of transistor Q2, cooperates in producing a current I_{S} as will be described in more detail in the following, particularly with reference to Figure 5.

There is moreover provided a biasing resistor (or more precisely a feedback resistor, as will be described in the following) R2, connected between the collector of transistor Q1 and the base of transistor Q2.

Connected between the control electrode (the base, in the case of a bipolar transistor) of switch Q2 and ground there is moreover provided a series connection between a third resistor R3 and a Zener diode D_{Z}, connected with the anode facing towards ground.

The diagram in Figure 3 refers for exemplary purposes to an embodiment wherein converter 10 can be fed, at the input terminal In, by a voltage generator V_{S} referred to ground, while a load Load, for example of a resistive kind, is connected between the output terminal Out and ground, as shown in Figure 4, where it is assumed that the output voltage is lower than, and has the same polarity as the input voltage.

Of course, with a proper modification of the polarities of components (for example using a p-n-p transistor where presently an n-p-n transistor is shown, and vice versa), it is also possible to obtain an operation with inverted polarities.

In the embodiment referred to in Figure 3, transistors Q1 and Q2 define a p-n-p-n structure, such as to form in practice an SCR device with latch operation, with reactive cell LC of the output stage assembly (L1, Cout), which causes its oscillation while the Zener diode D_{Z} operates as a reference element with a voltage regulating function.

Beside obtaining a latch structure together with transistor Q2, transistor Q1 operates as a pass switch of the buck converter, while transistor Q2, beside completing the latch, performs the regulating function with the aim of obtaining a constant output voltage.

The operation of the circuit in Figure 3 can be schematically explained as follows.

It is assumed that initially both Q1 and Q2 are in an open switch condition, i.e. in the cut-off range in case of transistors.

The current generator implemented by resistor R1 in Figure 3 injects a current I_{S} (see Figure 5 as well) into the base of Q2, which amplifies this current and increases its collector current, making Q1 conductive as well.

Through resistor R2 (also refer to impedance Z_{F} in Figure 5), a regenerating feedback is induced so as to increase the base current of Q2, until a final condition of full conductivity is achieved (a saturation condition, in the case of transistors) both for Q1 and Q2.

The conductivity of Q1 (saturated transistor) and the fact that the voltage on output capacitor Cout is lower than the voltage on the input In cause a current increase through inductor L1. This current produces the charge of capacitor Cout and the transfer of current into the load Load.

The current in inductor L1 keeps on rising until one of the following conditions is met:
- transistor Q1, no longer able to support the collector current because of its finite gain, starts opening; this condition is typical of the start-up phase or of all situations wherein the voltage on capacitor Cout is lower than the regulation value;
- the voltage across capacitor Cout approaches the reference voltage set on Zener diode D_{Z}, less the base-emitter voltage (V_{BE}) of Q2, which starts opening; this takes place in normal operating conditions, i.e. when the output voltage has reached the expected value, which in this operating mode is precisely set.

Such conditions start a switch-off phase of transistor Q1, which starts opening, while its collector current falls rapidly. As the collector voltage of Q1 is now below ground, because of the current flowing through inductor L1, feedback element R2 (Z_{F} in Figure 5) drains current from I_{S}, determining a marked latch-off state for transistor Q2.

When Q1 opens completely, the current keeps on flowing through inductor L1, freewheeling diode D1 and capacitor Cout. This current is higher than the current in load Load, which raises the voltage on output capacitor Cout and therefore on the emitter of Q2. This confirms and maintains the off state of Q1 until the current through L1 falls and allows the voltage on capacitor Cout to decrease.

Finally, when the voltage on the respective emitter falls as much as to bring Q2 back to the active state or, in any case, when such a collector current of Q2 is established again so as to reactivate Q1, the result is a cyclic repetition of the previously described operating conditions.

Therefore, an alternate switching (i.e. an oscillation) of the converter is obtained between:
- a) a first operating condition, wherein the first electronic switch, i.e. Q1, having become conductive due to the second electronic switch Q2 becoming conductive, produces a current flow in inductor L1 and an accumulation of charge on the output capacitor Cout, and
- b) a second operating condition, wherein the first electronic switch Q1 opens causing the current flow through freewheeling diode D1, inductor L1 and output capacitor Cout, while the second electronic switch Q2 is open.

A behaviour of the converter is therefore obtained which can be regarded as managed, in a combined fashion, by a peak current control function and by the behaviour of a voltage control buck converter with hysteresis, on the basis an astable structure which, by using only two active components (i.e. Q1 and Q2), simultaneously performs switching, voltage regulation and power amplification.

Figure 5 shows (with a slightly different layout of components, in order to achieve a better clarity):
- the function of resistor R2 of Figure 3 as a feedback element Z_{F}, adapted to restore current I_{S} in the previously described way (once again it is to be reminded that load Load, albeit shown, is not in itself a part of the converter), and
- the fact that both switches Q1 and Q2 implement in practice an SCR function (p-n-p-n) in combination with reactive cell L1, Cout and with the reaction by Z_{F}.

Figure 6 shows the option, in various embodiments, to add to the basic arrangement of Figure 3 a current limiting function, acting on switch Q1; this is achieved by a shunt resistor R4 traversed by the current flowing in Q1, and by a further transistor (a bipolar transistor in the presently considered example) Q3, the base and the collector whereof being connected across shunt resistor R4. As the base current of Q3 is negligible, there is therefore provided a current limiter comprising a shunt resistor (i.e. R4) sensitive to the current flowing through electronic switch Q1 to which the current limiter is associated, and a limiting transistor (i.e. Q3) which is sensitive to the voltage across shunt resistor R4 and which acts on the control electrode (base) of electronic switch Q1 to which the current limiter is associated.

The assembly comprising shunt resistor R4 and transistor Q3 enables the control of the peak current flowing through switch Q1 and inductor L1. In this way it is possible to ensure a wholly deterministic behaviour of converter 10 when, for example during start-up or in case of an overload, it may not perform a complete function of voltage control.

In this way it is also possible to reduce the voltage ripple on output capacitor Cout, therefore decreasing the peak current and increasing the switching frequency.

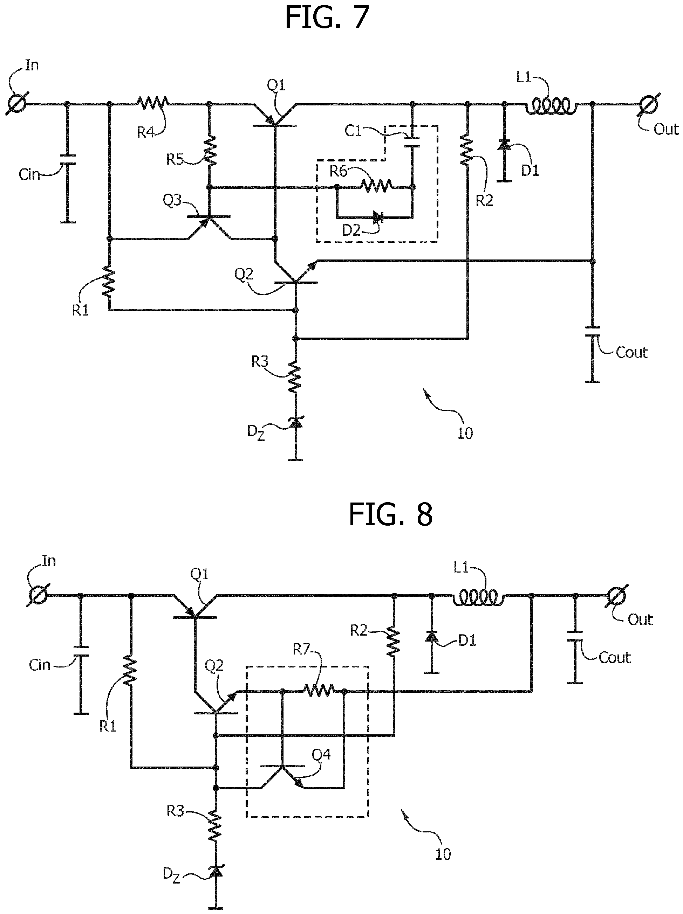

Figure 7 shows a possible addition of a turn-off network, acting between the base of Q3 and the collector of Q1.

Specifically, this network is comprised of a capacitor C1 connected on one side to the emitter of Q1 and on the other side to the parallel connection of a further resistor R6 and of a diode D2, the cathode whereof is connected towards capacitor C1, so as to make the derivative network unsymmetrical. This derivative network has the function of making the turning off of switch Q1 faster through the action of Q3. In this way it is possible to improve the conversion efficiency and to obtain higher switching frequencies.

The current limiting effect can be suppressed by removing resistor R4, while Q3 keeps the function of driving the turn-off network. Such a network is moreover useful to achieve a snubbing function on the switching node during a discontinuous operation.

Figure 8 shows the option of providing a current limiter for transistor Q2 as well. The function is therefore similar to what has been shown in Figure 6, but it is referred to switch Q2 instead of switch Q1.

Figure 8 specifically shows the possibility of interposing a shunt resistor R7 between the emitter of transistor Q2 and the output terminal Out. There is moreover provided a further bipolar transistor Q4, which is connected in such a way as to be able to detect the voltage across R7 (and consequently the current flowing through switch Q2, the base current of Q4 being negligible) and to turn conductive when the voltage across R7 (and therefore the current flowing from Q2) exceeds a certain level. In the presently shown embodiment, with transistor Q4 which is comprised of a bipolar transistor, resistor R7 is therefore interposed between the base and the emitter of transistor Q4.

There is therefore provided a current limiter comprising a shunt resistor (i.e. R7) sensitive to the current flowing through electronic switch Q2 to which the current limiter is associated, and a limiting transistor (i.e. Q4) which is sensitive to the voltage across shunt resistor R7, and which acts on the control electrode (base) of electronic switch Q2 to which the current limiter is associated.

Shunt resistor R7 and transistor Q4 limit the collector current of Q2, ensuring a more predictable behaviour of the drive stage in operating conditions different from normal, and in any case limiting power dissipation on Q2.

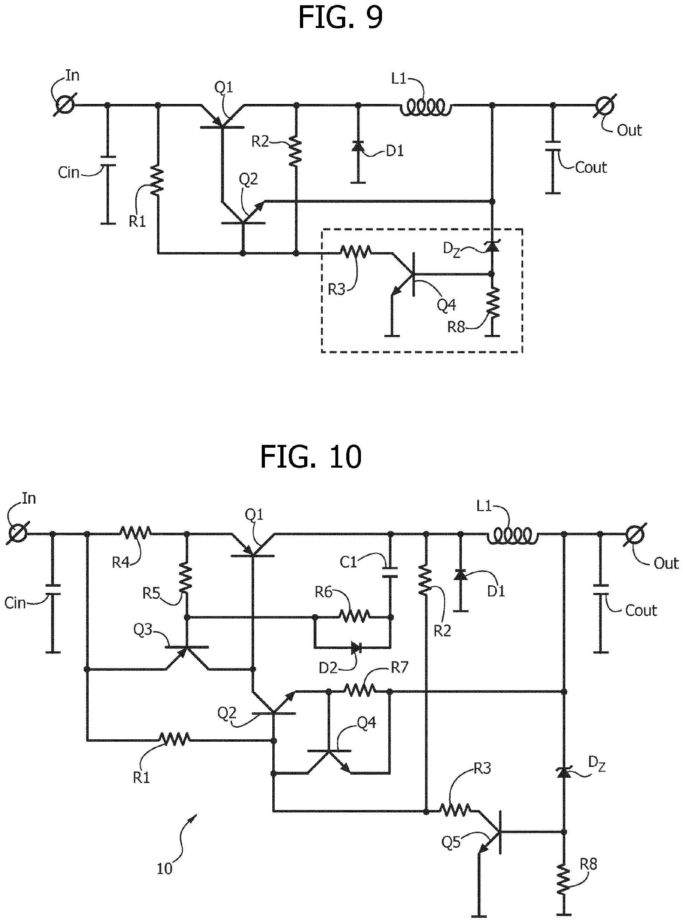

Finally, Figure 9 shows the possibility to associate, to resistor R3 included in the branch connected to the control electrode (base) of Q2, an error amplifier which is comprised, in the illustrated example, of a bipolar transistor Q5.

Transistor Q5 has its own main current line (emitter-collector, in the case of the implementation as a bipolar transistor) connected between resistor R3 and ground, while the control electrode (base, in the case of the implementation as a bipolar transistor) of Q5 is connected to the middle point of a divider interposed between the emitter of Q2 (i.e. terminal Out) and ground. Specifically, such a divider comprises a Zener diode D_{Z} which defines the upper branch of the divider, the cathode of the Zener diode being connected to the emitter of Q2 and to terminal Out and the anode defining said middle point to which it is connected. The lower branch of the divider comprises a resistor R8, interposed between said middle point and ground.

In the solution in Figure 9, therefore, the control electrode (base) of the second switch or electronic switch Q2 is acted upon by the series connection of resistor R3 and error amplifier Q5, the error amplifier Q5 being sensitive to a scaled-down version of output voltage Out, obtained through Zener diode D_{Z} connected to output voltage Out.

Resorting to the solution schematically shown in Figure 9 renders the output voltage of the converter more stable in case of load variations, and reduces the output voltage ripple thanks to the amplification of the hysteresis window achieved by Q5.

The diagram in Figure 10 summarizes the possibility of integrating the basic arrangement in Figure 3 with the various additional solutions referred to in Figures 6 to 9.

It will be noted however that such additional solutions do not require a simultaneous implementation. When the circuit is implemented, actually, it is possible both to resort to the basic arrangement shown in Figure 3 and to choose an integration of such basic structure, on the basis of the specific application requirements, with one o several such additional solutions.

The regulating function implemented by regulating the trigger current I_{S} injected into the base of Q2 (in practice by "subtracting" current), which is shown herein as achieved through resistor R3 and diode D_{Z} (see Figures 3, 6, 7, 8) or else with resistor R3 and error amplifier Q5 with its associated elements D_{Z} and R8 (see Figures 9 and 10) may also be implemented differently, for example with an operational amplifier or a specific component.

For example, various embodiments may unite features of the exemplary regulator of Figures 3, 6, 7, 8 (on one hand) and features of the exemplary regulator of Figures 9 and 10 (on the other hand) by providing a resistive voltage divider connected to terminal Out and acting on resistor R3 through a frequency compensation network (for example of the RC kind).

The presently described embodiments are extremely simple.

Even in the "complete" implementation of Figure 10, the number of components is reduced in comparison with conventional solutions. As the output voltage is only limited by the rating of active elements of the basic structure (i.e. switches Q1 and Q2), it is possible to achieve very broad ranges of input supply without incurring in the limitations that monolithic structures are subjected to.

It will be noted moreover that various presently considered embodiments do not require auxiliary voltages, and can also exhibit an oscillating frequency which automatically adapts with high efficiency to various load conditions, within a wide range of possible load values.

Practical implementations performed by the Applicant have shown the possibility to achieve an output voltage of about 13 V with an input voltage comprised between 18 and 150 V, a current in the load varying between 0 e 80 mA, a mean efficiency of 75% and a power consumption lower than 150 mW.

Of course, without prejudice to the underlying principle of the invention, the details and the embodiments may vary, even appreciably, with respect to what has been described by way of example only, without departing from the scope of the invention as defined by the annexed claims.

## Claims

1. A switching buck converter having an input (In) for an input voltage (V_{S}) and an output (Out) for an output voltage to be supplied to a load (Load), the converter including:
- an output stage with a first (Cout) and a second (D1) lateral branch and an intermediate branch (L1) interposed therebetween, wherein said first lateral branch includes an output capacitor (Cout) for charging at said output voltage, said intermediate branch includes an inductor (L1) to circulate current in said output capacitor (Cout) and said second lateral branch includes a freewheeling diode (D1) to permit current flow from ground towards said inductor (L1),
- a first electronic switch (Q1) coupled to said input (In) and said output stage (D1, L1, Cout), said first electronic switch (Q1) having a control electrode,
- a second electronic switch (Q2) coupled to said output capacitor (Cout) and the control electrode of said first electronic switch (Q1), said second electronic switch (Q2) having a respective control electrode, and
- a current generator (R1) to inject a current (I_{S}) into said respective control electrode of said second electronic switch (Q2), to render said second electronic switch conductive and produce alternate switching of the converter between:
- a) a first operating condition, wherein said first electronic switch (Q1), having become conductive due to said second electronic switch (Q2) becoming conductive, produces a current flow in said inductor (L1) and accumulation of charge on said output capacitor (Cout), and
- b) a second operating condition, wherein said first electronic switch (Q1) opens to produce current flow through said freewheeling diode (D1), said inductor (L1) and said output capacitor (Cout) while said second electronic switch (Q2) is open,
the converter including a turn-off circuit (Q3, C1, R6, D2) with a derivative network (C1, R6, D2) acting across said first electronic switch (Q1), and being **characterized in that** said derivative network includes the series connection of:
- a turn-off capacitor (C1), and
- the parallel connection of a resistor (R6) and a diode (D2).

2. The converter of claim 1, wherein said first (Q1) and said second (Q2) electronic switch include a first (Q1) and a second (Q2) bipolar transistor, respectively, with the collector of said second bipolar transistor (Q2) connected at the base of said first transistor (Q1).

3. The converter of any of the previous claims, including a feedback impedance (R2, Z_{F}) interposed between said output stage (D1, L1, Cout) and said respective control electrode of said second electronic switch (Q2).

4. The converter of any of the previous claims, including a current limiter (Q3, R4, Q4, R7) associated with at least one, and preferably both, of said first (Q1) and said second (Q2) electronic switch.

5. The converter of claim 4, wherein said current limiter includes:
- a shunt resistor (R4, R7) sensitive to the current flowing through the electronic switch (Q1, resp. Q2) to which the current limiter is associated, and
- a limiting transistor (Q3, Q4), sensitive to the voltage across said shunt resistor (R4, R7) and acting on the control electrode of the electronic switch (Q1, resp. Q2) to which the current limiter is associated.

6. The converter of any of the previous claims, including a regulator (R3, D_{Z}; R3, Q5, R8, D_{Z}) of the current (I_{S}) injected into said respective control electrode of said second electronic switch (Q2).

7. The converter of claim 6, wherein said regulator includes the series connection of a resistor (R3) and a Zener diode (D_{Z}).

8. The converter of claim 6, wherein said regulator includes the series connection of a resistor (R3) and an error amplifier (Q5), wherein said error amplifier (Q5) is sensitive to a scaled-down version of said output voltage, a Zener diode (D_{Z}) being preferably provided connected to said output voltage (Out) to provide said scaled-down version of said output voltage.

## Patentansprüche

1. Schaltabwärtswandler, der einen Eingang (In) für eine Eingangsspannung (Vₛ) und einen Ausgang (Out) für eine Ausgangsspannung, die einer Last (Load) bereitzustellen ist, aufweist, wobei der Wandler beinhaltet:
- eine Ausgangsstufe mit einem ersten (Cout) und einem zweiten (D1) seitlichen Zweig und einem Zwischenzweig (L1), der dazwischengeschaltet ist, wobei der erste seitliche Zweig einen Ausgangskondensator (Cout) beinhaltet zum Laden bei der Ausgangsspannung, wobei der Zwischenzweig eine Spule (L1) beinhaltet, um Strom in dem Ausgangskondensator (Cout) zu zirkulieren und der zweite seitliche Zweig eine Freilaufdiode (D1) beinhaltet, um Stromfluss von einer Erdung zu der Spule (L1) zu erlauben,
- einen ersten elektronischen Schalter (Q1), der mit dem Eingang (In) und der Ausgangsstufe (D1, L1, Cout) gekoppelt ist, wobei der erste elektronische Schalter (Q1) eine Steuerelektrode aufweist,
- einen zweiten elektronischen Schalter (Q2), der mit dem Ausgangskondensator (Cout) und der Steuerelektrode des ersten elektronischen Schalters (Q1) gekoppelt ist, wobei der zweite elektronische Schalter (Q2) eine entsprechende Steuerelektrode aufweist, und
- einen Stromgenerator (R1), der ausgestaltet ist, um einen Strom (Iₛ) in die entsprechende Steuerelektrode des zweiten elektronischen Schalters (Q2) einzuführen, um den zweiten elektronischen Schalter leitend zu machen und ein abwechselndes Schalten des Wandlers zwischen folgenden zu erzeugen:
- a) einer ersten Betriebsbedingung, wobei der erste elektronische Schalter (Q1), der leitend wurde, weil der zweite elektronische Schalter (Q2) leitend wurde, einen Stromfluss in der Spule (L1) und eine Ladungsakkumulation an dem Ausgangskondensator (Cout) erzeugt, und
- b) einer zweiten Betriebsbedingung, wobei der erste elektronische Schalter (Q1) sich öffnet, um einen Stromfluss durch die Freilaufdiode (D1), die Spule (L1) und den Ausgangskondensator (Cout) zu erzeugen, während der zweite elektronische Schalter (Q2) geöffnet ist,
wobei der Wandler eine Abschaltschaltung (Q3, C1, R6, D2) mit einem Ableitnetzwerk (C1, R6, D2) beinhaltet, welche über den ersten elektronisehen Schalter (Q1) agiert und **dadurch gekennzeichnet ist, dass** das Ableitnetzwerk folgende Reihenschaltung beinhaltet:
- einen Abschaltkondensator (C1) und
- die parallele Verbindung eines Widerstands (R6) und einer Diode (D2).

2. Wandler nach Anspruch 1, wobei der erste (Q1) und der zweite (Q2) elektronische Schalter jeweils einen ersten (Q1) und einen zweiten (Q2) Bipolar-Transistor beinhaltet, wobei der Kollektor des zweiten Bipolar-Transistors (Q2) mit der Basis des ersten Transistors (Q1) verbunden ist.

3. Wandler nach irgendeinem der vorherigen Ansprüche, beinhaltend eine Rückkoppelungsimpedanz (R2, Z_{F}), die zwischen die Ausgangsstufe (D1, L1, Cout) und die entsprechende Steuerelektrode des zweiten elektronischen Schalters (Q2) geschaltet ist.

4. Wandler nach irgendeinem der vorherigen Ansprüche, beinhaltend einen Strombegrenzer (Q3, R4, Q4, R7), der mit zumindest einem und bevorzugt beiden aus dem ersten (Q1) und dem zweiten (Q2) elektronischen Schalter assoziiert ist.

5. Wandler nach Anspruch 4, wobei der Strombegrenzer beinhaltet:
- einen Nebenschlusswiderstand (R4, R7), welcher empfindlich auf den Strom ist, der durch den elektronischen Schalter (Q1 bzw. Q2) fließt, mit welchem der Strombegrenzer assoziiert ist, und
- einen Begrenzungstransistor (Q3, Q4), der empfindlich auf die Spannung über dem Nebenschlusswiderstand (R4, R7) ist und auf die Steuerelektrode des elektronischen Schalters (Q1 bzw. Q2) reagiert, mit welchem der Strombegrenzer assoziiert ist.

6. Wandler nach irgendeinem der vorherigen Ansprüche, beinhaltend einen Regler (R3, D_{Z}; R3, Q5, R8, D_{Z}) des Stroms (Iₛ), der in die entsprechende Steuerelektrode des zweiten elektronischen Schalters (Q2) eingefügt wird.

7. Wandler nach Anspruch 6, wobei der Regler die Reihenschaltung eines Widerstands (R3) und einer Zener-Diode (Dz) beinhaltet.

8. Wandler nach Anspruch 6, wobei der Regler die Reihenschaltung eines Widerstands (R3) und eines Fehlerverstärkers (Q5) beinhaltet, wobei der Fehlerverstärker (Q5) empfindlich auf eine herunterskalierte Version der Ausgangsspannung ist, wobei eine Zener-Diode (Dz) vorzugsweise mit der Ausgangsspannung (Out) verbunden bereitgestellt ist, um die herunterskalierte Version der Ausgangsspannung bereitzustellen.

## Revendications

1. Convertisseur abaisseur à découpage ayant une entrée (In) pour une tension d'entrée (Vₛ) et une sortie (Out) pour une tension de sortie à fournir à une charge (Load), le convertisseur comportant :
- un premier étage de sortie avec une première (Cout) et une seconde (D1) branche latérale et une branche intermédiaire (L1) interposée entre elles, ladite première branche latérale comportant un condensateur de sortie (Cout) pour la charge à ladite tension de sortie, ladite branche intermédiaire comportant une inductance (L1) pour faire circuler un courant dans ledit condensateur de sortie (Cout) et ladite seconde branche latérale comportant une diode de roue libre (D1) pour permettre au courant de circuler de la masse vers ladite inductance (L1),
- un premier commutateur électronique (Q1) couplé à ladite entrée (In) et audit étage de sortie (D1, L1, Cout), ledit premier commutateur électronique (Q1) ayant une électrode de commande,
- un second commutateur électronique (Q2) couplé audit condensateur de sortie (Cout) et à l'électrode de commande dudit premier commutateur électronique (Q1), ledit second commutateur électronique (Q2) ayant une électrode de commande respective, et
- un générateur de courant (R1) pour injecter un courant (Iₛ) dans ladite électrode de commande respective dudit second commutateur électronique (Q2), pour rendre conducteur ledit second commutateur électronique et produire une commutation alternée du convertisseur entre :
a) une première condition de fonctionnement, dans laquelle ledit premier commutateur électronique (Q1), qui est devenu conducteur parce que ledit second commutateur électronique (Q2) devient conducteur, produit un courant circulant dans ladite inductance (L1) et une accumulation de charges sur ledit condensateur de sortie (Cout), et
b) une seconde condition de fonctionnement, dans laquelle ledit premier commutateur électronique (Q1) s'ouvre pour produire un courant circulant dans ladite diode de roue libre (D1), ladite inductance (L1) et ledit condensateur de sortie (Cout) lorsque ledit second commutateur électronique (Q2) est ouvert,
le convertisseur comportant un circuit d'extinction (Q3, C1, R6, D2) avec un réseau dérivatif (C1, R6, D2) agissant aux bornes dudit premier commutateur électronique (Q1), et étant **caractérisé en ce que** ledit réseau dérivé comporte la liaison en série :
- d'un condensateur d'extinction (C1), et
- de la liaison en parallèle d'une résistance (R6) et d'une diode (D2).

2. Convertisseur selon la revendication 1, dans lequel ledit premier (Q1) et ledit second (Q2) commutateur électronique comportent un premier (Q1) et un second (Q2) transistor bipolaire, respectivement, le collecteur dudit second transistor bipolaire (Q2) étant relié à la base dudit premier transistor (Q1).

3. Convertisseur selon l'une quelconque des revendications précédentes, comportant une impédance de contre-réaction (R2, Z_{F}) interposée entre ledit étage de sortie (D1, L1, Cout) et ladite électrode de commande respective dudit second commutateur électronique (Q2).

4. Convertisseur selon l'une quelconque des revendications précédentes, comportant un limiteur de courant (Q3, R4, Q4, R7) associé à au moins l'un, et de préférence aux deux, desdits premier (Q1) et second (Q2) commutateurs électroniques.

5. Convertisseur selon la revendication 4, dans lequel ledit limiteur de courant comporte :
- une résistance shunt (R4, R7) sensible au courant circulant dans le commutateur électronique (Q1, respectivement Q2) auquel est associé le limiteur de courant, et
- un transistor de limitation (Q3, Q4), sensible à la tension aux bornes de ladite résistance shunt (R4, R7) et agissant sur l'électrode de commande du commutateur électronique (Q1, respectivement Q2) auquel est associé le limiteur de courant.

6. Convertisseur selon l'une quelconque des revendications précédentes, comportant un régulateur (R3, D_{z} ; R3, Q5, R8, D_{z}) du courant (I_{S}) injecté dans ladite électrode de commande respective dudit second commutateur électronique (Q2).

7. Convertisseur selon la revendication 6, dans lequel ledit régulateur comporte la liaison en série d'une résistance (R3) et d'une diode Zener (D_{Z}).

8. Convertisseur selon la revendication 6, dans lequel ledit régulateur comporte la liaison en série d'une résistance (R3) et d'un amplificateur d'erreur (Q5), ledit amplificateur d'erreur (Q5) étant sensible à une version à échelle réduite de ladite tension de sortie, une diode Zener (D_{Z}) étant de préférence prévue reliée à ladite tension de sortie (Out) pour fournir ladite version à échelle réduite de ladite tension de sortie.
